# EUROPEAN PATENT SPECIFICATION

(11) **EP 3 800 091 B1**
(45) Date of publication and mention of the grant of the patent: **13.04.2022**
(21) Application number: 20199954.7
(22) Date of filing: 02.10.2020
(51) Int. Cl.: B60R 13/10

(54) **NUMBER PLATE HOLDER**
HALTERUNG FÜR EIN KENNZEICHEN
PORTE-PLAQUE MINÉRALOGIQUE

(30) Priority: 04.10.2019 IT 201900018023
(43) Date of publication of application: 07.04.2021
(73) Proprietor: E.CO. S.r.l., 10043 Orbassano (TO) (IT)
(72) Inventor: RETTAGLIATI, Daniele, 10043 ORBASSANO (TO) (IT)
(74) Representative: Bosia, Alessandra

(56) References cited:
- EP-A2- 1 772 319
- EP-B1- 1 772 319
- CH-A1- 711 673
- US-A- 4 038 770

## Description

### TECHNICAL FIELD

This invention refers to a number plate holder that is suitable for being coupled to a number plate.

### BACKGROUND ART

Number plate holders are used to mount different types of number plates on vehicles of different types and brands.

Specifically, the number plate holder is fixed to the vehicle by means of fasteners and the number plate is coupled to the number plate holder by means of additional fasteners.

Number plate holders of a known type comprise damping elements, suitable for reducing noise and clicking due to vibrations and shocks transmitted to the number plate by the number plate holder, for example when the vehicle is in motion or when the boot door is closed.

The European patent EP-B1-1772319 describes a number plate holder comprising a central portion surrounded on three sides by a rigid perimetric rim and at least one element made of damping material arranged at said central portion.

The Swiss patent application CH-A1-711673 describes a number plate holder comprising a central portion surrounded on all sides by a rigid perimetric rim and two spacer elements made of damping material arranged at said central portion.

However, number plate holders of a known type do not display solutions specifically aimed at damping the transmission of vibrations from the vehicle to the number plate holder.

As a result, the effectiveness of vibration damping and the noise reduction in known number plate holders are unsatisfactory.

Therefore, there is a need in the sector for a number plate holder that efficiently dampens the vibrations and shocks transmitted to the number plate from the vehicle.

In addition, known number plate holders are mounted on vehicles in appropriate seats, with clearly defined dimensions.

In order to avoid damage to number plate holders when mounted in the corresponding vehicle seats, known number plate holders comprise a thicker or reinforced perimetric rim.

The obstruction of this perimetric rim, especially in the direction of the thickness of the number plate holder, may be incompatible with the vehicle seat where the number plate holder is to be mounted and may cause interference between the number plate holder and the vehicle.

In particular, a bulkier perimetric rim better protects the number plate holder from shocks, but risks affecting the installation of the number plate holder on the vehicle.

As a result, there is also a need in the sector for a number plate holder that is protected against shocks and has, at the same time, dimensions that do not interfere with the vehicle.

Furthermore, the fasteners for fixing the number plate to the number plate holder of a known type do not enable the easy and quick decoupling and subsequent coupling of the number plate from/to the number plate holder.

In fact, according to the regulations in force in some countries, it is possible to remove the number plate from the vehicle to apply it, for example, to the trailer towed by the same vehicle.

In particular, these known fixing means comprise at least one lock, which enables the number plate to be uncoupled/coupled from/to the number plate holder only if the relevant key is available.

There is, therefore, a need to have a number plate holder that enables quick and easy uncoupling and coupling of the number plate from/to the number plate holder.

### DISCLOSURE OF INVENTION

One purpose of this invention is to provide a number plate holder that overcomes the above-mentioned drawbacks in a simple and economical way.

This purpose is obtained with this invention because it refers to a number plate holder as defined in claim 1.

### BRIEF DESCRIPTION OF THE DRAWINGS

In order to better understand this invention, a nonlimiting preferred embodiment thereof will be described below, by way of example, with reference to the accompanying drawings, in which:
- Figures 1 and 2 are perspective views of a number plate holder according to the present invention, representing the two faces of the number plate holder, respectively;
- Figure 3 is a perspective view of an assembly comprising the number plate holder of Figures 1 and 2 and a number plate, with a portion of the number plate holder removed for clarity; and
- Figure 4 is a detail of the number plate holder of Figures 1 to 3, with a perspective view of a partial cross section of the number plate holder itself.

### BEST MODE FOR CARRYING OUT THE INVENTION

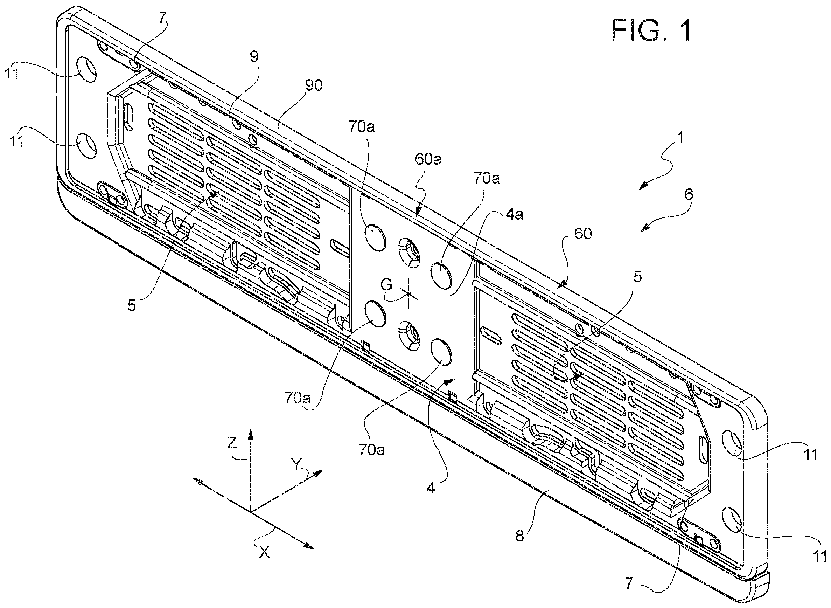

With reference to Figure 1, the reference number 1 indicates a number plate holder suitable for being coupled to a number plate 2, which comprises a perimetric rim 3 and a central plate portion 4 delimited by the perimetric rim 3.

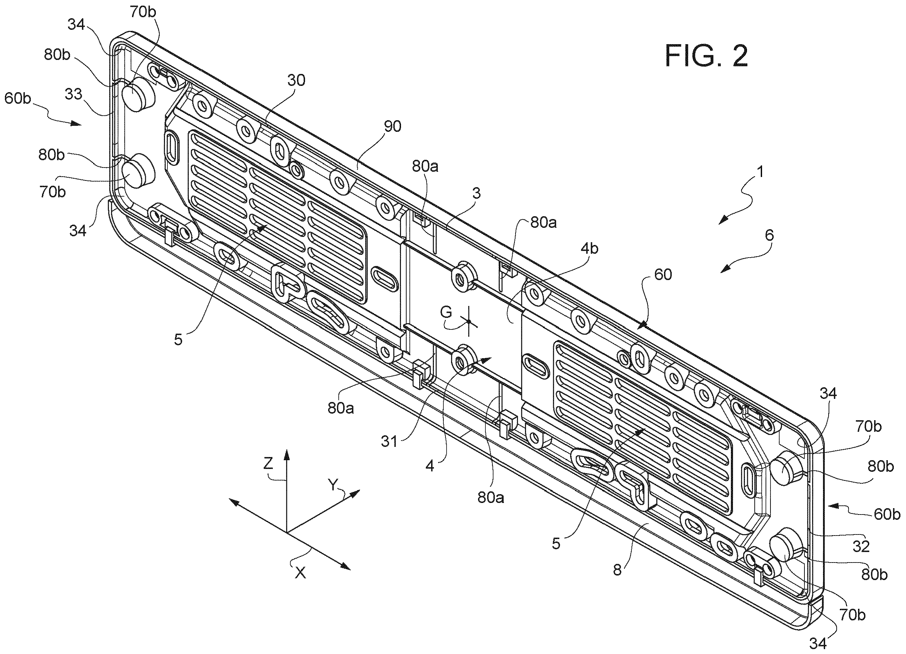

In particular, the perimetric rim 3 is formed by an upper edge 30, a lower edge 31, and two lateral edges 32, 33 (Figure 2).

In the embodiment shown, the upper and lower edges 30, 31 are parallel to each other and to a direction X. The lateral edges 32, 33 are basically parallel to each other and to a direction Z, transversely oriented to the direction X.

It is also possible to define a direction Y, transverse to the directions X, Z.

In use, the directions X, Y are horizontal and the direction Z is vertical.

The upper edge 30, the lower edge 31, and the two lateral edges 32, 33 of the perimetric rim 3 are preferably joined by rounded angles 34.

In addition, the central plate portion 4 comprises a first face 4a (visible in Figure 1) adapted to house the number plate 2 and a second face 4b (visible in Figure 2), opposite the first face 4a, adapted to be coupled to the vehicle (not illustrated).

The central plate portion 4 is parallel to a plane defined by the directions X and Z.

In particular, the vehicle may be a motor vehicle, moped, motorcycle, trailer or any other means of transport on which it is necessary to affix a number plate 2 by means of the number plate holder 1.

The number plate holder 1 is preferably made of plastic.

As shown in Figures 1 and 2, the central plate portion 4 comprises holes 5 for fixing the number plate holder 1 to the vehicle by means of known fasteners not illustrated.

In particular, the holes 5 are variously shaped, so as to enable the fixing of the number plate holder 1 to various types of vehicles.

The central plate portion 4 preferably comprises, in addition, stiffening ribs 7 that provide the number plate holder 1 with increased stiffness and resistance.

In addition, the number plate holder 1 is coupled to a stick element 8 that at least partially overlaps the lower edge 31 of the perimetric rim 3.

The stick element 8 can be used, in particular, to display written advertisements, for example, the name of the car dealership.

Furthermore, the number plate holder 1 comprises a damping element 6, which is made of damping material, preferably elastomeric material.

Damping element 6 is formed by one portion 60a and another portion 60b, arranged respectively on the faces 4a, 4b at the central plate portion 4.

According to the invention the damping element 6 comprises, in addition, one portion 60, arranged around the whole perimetric rim 3.

The portions 60, 60a, and 60b are preferably configured as a single piece, which is co-moulded with the number plate holder 1.

In particular, the portion 60 comprises:
- an anchoring segment 90 (Figures 1 to 4), applied to and overlapping the perimetric rim 3; and
- an edge 9 projecting from the anchoring segment 90 along the whole perimetric rim 3 (Figure 1).

The projecting edge 9 extends so that it overhangs from the anchoring segment 90 towards the central plate portion 4.

In addition, the projecting edge 9 extends so that it overhangs from the anchoring segment 90 towards the face 4a.

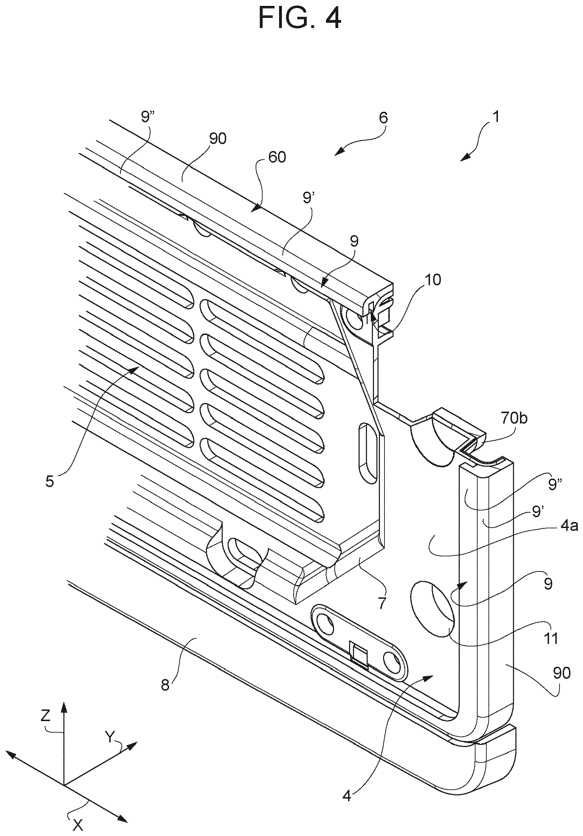

As shown in Figure 4, the projecting edge 9 comprises a stretch 9' and another stretch 9' ' . The stretch 9' is placed between the anchoring segment 90 and the other stretch 9''.

More specifically, proceeding from the anchoring segment 90 to the stretch 9'', the first stretch 9' progressively moves away from the anchoring segment 90.

The stretch 9'', in addition, constitutes a free end of the portion 60.

At the upper and lower edges 30, 31, the stretch 9'' extends so that it overhangs from the first stretch 9' along the direction Z towards the central plate portion 4.

At the lateral edges 32, 33, the stretch 9'' extends so that it overhangs from the first stretch 9' along the direction X towards the central plate portion 4.

The first stretch 9' and the second stretch 9'' define a frame that can be engaged by the number plate and arranged on the side of the face 4a.

In the embodiment illustrated, the length of the stretch 9'' along the direction X at the lateral edges 32, 33 is greater than the length of the same stretch 9'' along the direction Z at the upper and lower edges 30, 31.

The projecting edge 9 forms, in addition, a seat 10 in the portion 60 arranged around the whole perimetric rim 3 and adapted to be engaged by the number plate 2 to block the displacement thereof and dampen its vibrations.

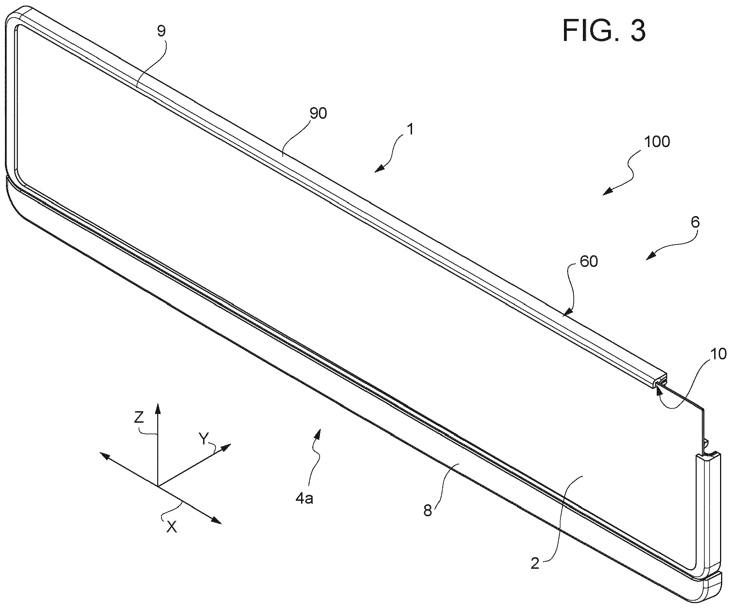

The portion 60 can assume a locking configuration (illustrated in Figures 1 and 3) and an unlocking configuration not illustrated.

In particular, in the locking configuration, the projecting edge 9 is positioned so as to lock the displacement of the number plate 2, which engages the seat 10 delimited by it (Figure 3).

In the unlocking configuration, the projecting edge 9 is elastically moved away from the central plate portion 4, so as to enable the displacement and the removal of the number plate 2.

The portion 60 arranged at the face 4a, when it is in the locking configuration, is preferably completely in contact with the number plate 2 when this engages the seat 10 (Figure 3).

At the face 4b, the portion 60 is preferably aligned with the perimetric rim 3 along the direction X (Figure 2).

The portion 60 at the face 4b is at least partially in contact with the vehicle when the number plate holder 1 is fixed to the vehicle.

In the embodiment illustrated, the portion 60a is, in addition, formed by four buttons 70a, which project from the face 4a of the central plate portion 4 along the direction Y (Figure 1).

In particular, the buttons 70a project from the face 4a along a length that is less than the length of the projecting edge 9 along the direction Y.

The buttons 70a are cylindrical elements with a circular cross-section and aligned in twos along the direction X and the direction Z.

In addition, the buttons 70a are at the same distance from the centre of area G of the central plate portion 4.

The number plate 2 is at least partially in contact with the portion 60a when it is coupled to the number plate holder 1.

The portion 60b comprises four buttons 70b, projecting from the face 4b along the direction Y (Figure 2).

The buttons 70b are also cylindrical elements with a circular cross-section, aligned in twos along the direction X and the direction Z.

The buttons 70b are at the same distance from the centre of area G of the central plate portion 4 and are placed at a greater distance from the centre of area G than the buttons 70a.

In other words, the buttons 70b are closer to the perimetric rim 3 and, especially, to the lateral edges 32, 33 compared to the buttons 70a.

In particular, the buttons 70b project from the face 4b more than the buttons 70a from the face 4a.

The portion 60b comprises, in addition, elongated elements 80a, 80b, extending respectively parallel to the directions Z and X (Figure 2).

Specifically, the elongated elements 80a connect the portion 60 with the buttons 70a and the elongated elements 80b connect the portion 60 with the buttons 70b.

More specifically, these elongated elements 80a, 80b respectively connect the buttons 70a, 70b to the portion 60 at the face 4b.

The vehicle is at least partially in contact with the portion 60b when the number plate holder 1 is mounted on the vehicle itself.

The face 4a has, in addition, four recesses 11 with a truncated cone shape, arranged at the buttons 70b (Figure 1) .

In use, the number plate holder 1 is mounted to the vehicle by means of holes 5 through the fasteners, in a known way that is not illustrated since it is not necessary for the purposes of understanding this invention.

In particular, in this condition, the portion 60b and the portion 60 are at least partially in contact with the vehicle at the face 4b.

Subsequently, the projecting edge 9 of the portion 60 is elastically displaced from the position illustrated in Figure 1, so as to position the portion 60 in the unlocking configuration and to enable the insertion of the number plate 2.

The number plate 2 is, thus, inserted in the seat 10, while the portion 60 is in the unlocking configuration, so as to be coupled with the number plate holder 1.

In particular, the number plate is first at least partially overlapped on the face 4a of the central plate portion 4.

Subsequently, the number plate is engaged in the seat 10 and made to slide parallel to the direction X, while remaining engaged in the seat 10.

When the number plate 2 is completely overlapping the face 4a of the central plate portion 4 and completely engaged in the seat 10, the projecting edge 9 of one portion 60a is elastically brought back into the position illustrated in Figure 1, so as to bring the portion 60 into the locking configuration.

At this point, the displacement of the number plate 2 in relation to the number plate holder 1 is completely prevented.

In addition, in this condition, the portion 60a and the portion 60 are at least partially in contact with the number plate 2 at the face 4a.

The analysis of the features of the number plate holder 1 according to this invention, make clear the advantages that it achieves.

In particular, the number plate holder 1 comprises a damping element 6, the portions 60, 60a, 60b of which are arranged at both faces 4a, 4b of the number plate holder and at least partially in contact with, respectively, the number plate 2 and the vehicle.

As a result, the number plate holder 1 makes it possible to suitably dampen the vibrations and the shocks transmitted both to the number plate holder 1 by the vehicle and to the number plate 2 by the number plate holder 1.

This corresponds to an improvement in the overall efficiency of the damping of the vibrations and shocks transmitted by the vehicle to the number plate 2 compared to the damping elements of a known type illustrated in the introduction to this description.

In addition, since the seat 10 can be engaged by the number plate 2 to lock the displacement thereof, the number plate holder 1 enables the quick and easy uncoupling and coupling of the number plate 2 from/to the number plate holder 1.

Therefore, in countries where it is allowed, it will be possible to remove the number plate 2 from the number plate holder 1 in order to apply it, for example, to the trailer towed by the same vehicle, without needing to use keys or other tools.

In addition, since the number plate holder 1 comprises the portion 60, which is arranged around the whole perimetric rim 3, the dimensions of the perimetric rim 3 are significantly reduced at least along the direction Y compared to known number plate holders.

In fact, since the portion 60 is made of damping material, the protection against shocks of the number plate holder 1, which is ensured by the portion 60, is much more effective compared to the protection ensured by the perimetric rim 3, which is made of polypropylene, like the number plate holder 1.

The number plate holder 1 is protected against shocks, having, at the same time, dimensions that are such so as not to interfere with the vehicle. So, in the end, the portion 60 advantageously enables the locking of any displacement of the number plate 2 and to support it, while damping, at the same time, the vibrations thereof.

In addition, due to the reduced dimensions of the number plate holder 1, there are numerous aesthetic advantages that can be highlighted.

In fact, the number plate holder 1, by better matching the corresponding seat of the vehicle, is less visible and the number plate 2 seems to be directly coupled to the vehicle.

In addition, since the three portions 60, 60a, 60b form a single piece, it is possible to reduce the number of components that the number plate holder 1 comprises and the disadvantages connected to the corresponding mechanical tolerances. Since, in addition, the three portions 60, 60a, 60b constitute a single body, there are numerous advantages in terms of the manufacturability of the number plate holder 1 and reductions in the corresponding production costs.

Finally, it is clear that changes and variations can be made to the number plate holder 1 that do not depart from the scope of the claims.

The portions 60a, 60b could be configured in a different way and comprise, for example, a different number of buttons 70a, 70b and/or of elongated elements 80a, 80b.

The buttons 70a, 70b could be cone-shaped and/or have a non-circular cross-section, for example a rectangular one.

The portions 60, 60a, 60b could be configured as three distinct elements.

## Claims

1. A number plate holder (1) suitable to be coupled to a number plate (2) comprising:
- a perimetric rim (3) formed by a first edge (30), which is upper in use, a second edge (31), which is lower in use, and two third edges (32, 33), which are lateral in use;
- a central plate portion (4) delimited by said perimetric rim (3) and comprising a first face (4a) adapted to be coupled to said number plate (2) and a second face (4b), opposite to said first face (4a), adapted to be coupled to a vehicle; and
- a damping element (6), which is made of damping material;
said damping element (6) comprising:
- a first portion (60a) and a second portion (60b), arranged respectively on said first and second faces (4a, 4b), at said central portion (4);
**characterised in that** said damping element (6) comprises, in addition, a third portion (60), arranged around the whole perimetric rim (3).

2. The number plate holder (1) according to claim 1, wherein said first, second, and third portions (60a, 60b, 60) form a single piece.

3. The number plate holder (1) according to claim 1 or 2, wherein said third portion (60) comprises:
- an anchoring segment (90), applied and overlapped to said perimetric rim (3); and
- an edge (9) projecting from said anchoring segment (90) along the whole said perimetric rim (3) and extending so that it overhangs from said anchoring segment (90) towards said first face (4a);
said projecting edge (9) also extending so that it overhangs from said anchoring segment (90) towards said central portion (4).

4. The number plate holder (1) according to claim 3, wherein said projecting edge (9) forms a seat (10) in said third portion (60), arranged along the whole said perimetric rim (3) and adapted to be engaged by said number plate (2) to lock the displacement thereof and dampen vibrations.

5. The number plate holder (1) according to any of the preceding claims, wherein the first portion (60a) comprises at least one first cylindrical element (70a), which projects from said first face (4a) of the central portion (4) along a first direction (Y);
said first cylindrical element (70a) being at least partially in contact with said number plate (2), when said number plate (2), in use, is coupled to said number plate holder (1).

6. The number plate holder (1) according to claim 5, wherein said second portion (60b) comprises:
- at least one second cylindrical element (70b), which projects from said second face (4b) of said central portion (4) along said first direction (Y); and
- at least one first elongated element (80a) and one second elongated element (80b), extending respectively parallel to a second and to a third direction (Z, X);
said second, third directions (Z, X) being directed transversally to one another and to the first direction (Y);
said second portion (60b) being at least partially in contact with said vehicle, when said number plate holder (1), in use, is fixed to the vehicle.

7. The number plate holder (1) according to claim 5 or 6, wherein said first portion (60a) comprises a plurality of first cylindrical elements (70a), which are at the same distance with respect to the centre of area (G) of the central portion (4);
the second portion (60b) comprising a plurality of second cylindrical elements (70b), which are at the same distance with respect to the centre of area (G) of the central portion (4);
the second cylindrical elements (70b) being nearer to the perimetric rim (3) than the first cylindrical elements (70a).

8. The number plate holder (1) according to claim 7, wherein said second portion (60b) comprises a plurality of first elongated elements (80a) and a plurality of second elongated elements (80b);
each of said first elongated elements (80a) connecting the third portion (60) with a respective said first cylindrical element (70a);
each of said second elongated elements (80b) connecting the third portion (60) with a respective said second cylindrical element (70b).

9. The number plate holder (1) according to any of the preceding claims, wherein the damping element (6) is made of elastomeric material.

10. The number plate holder (1) according to any of the preceding claims, wherein the first, second, and third portions (60a, 60b, 60) are co-moulded with the number plate holder (1).

11. An assembly (100) comprising:
- a number plate holder (1) according to any of the preceding claims; and
- a stick element (8) coupled to the number plate holder (1) .

12. An assembly (100) comprising:
- a number plate holder (1) according to any of claims 1 to 10; and
- a number plate (2) coupled to the number plate holder (1) by means of said damping element (6).

## Patentansprüche

1. Kennzeichenhalter (1), der geeignet ist, mit einem Kennzeichen (2) verbunden zu werden, aufweisend:
- einen umlaufenden Rand, der durch einen ersten, im Gebrauch oberen Rand (30), einen zweiten, im Gebrauch unteren Rand (31) und zwei dritte, in Gebrauch seitliche Ränder (32, 33) gebildet wird;
- einen zentralen Plattenabschnitt (4), der durch den umlaufenden Rand (3) begrenzt ist und aufweisend eine erste Fläche (4a), die mit dem Nummernschild (2) verbunden werden kann, und eine zweite Fläche (4b), die der ersten Fläche (4a) gegenüberliegt und mit dem Fahrzeug verbunden werden kann; und
- ein Dämpfungselement (6), welches aus dämpfendem Material gefertigt ist;
- wobei das Dämpfungselement (6) aufweist:
- einen ersten Abschnitt (60a) und einen zweiten Abschnitt (60b), die an der ersten beziehungsweise zweiten Fläche (4a, 4b) an dem zentralen Abschnitt (4) angeordnet sind;
**dadurch gekennzeichnet,**
**dass** das Dämpfungselement (6) außerdem einen dritten Abschnitt (60) aufweist, der um den umlaufenden Rand (3) herum angeordnet ist.

2. Kennzeichenhalter (1) nach Anspruch 1, wobei der erste, zweite und dritte Abschnitt (60a, 60b, 60) ein einziges Stück ausbilden.

3. Kennzeichenhalter (1) nach Anspruch 1 oder 2, wobei der dritte Abschnitt (60) aufweist:
- ein Verankerungselement (90), das an dem umlaufenden Rand (3) angebracht ist und diesen überlappt; und
- eine Kante (9), die von dem Verankerungselement (90) entlang des gesamten umlaufenden Randes (3) vorsteht und sich so erstreckt, dass sie von dem Verankerungselement (90) in Richtung der ersten Fläche (4a) übersteht;
wobei sich der vorspringende Rand (9) ebenfalls so erstreckt, dass er von dem Verankerungselement (90) in Richtung auf den zentralen Abschnitt (4) vorspringt.

4. Kennzeichenhalter (1) nach Anspruch 3,
wobei die vorstehende Kante (9) einen Sitz (10) in einem Abschnitt (60) ausbildet, der entlang des gesamten umlaufenden Randes (3) angeordnet ist und mit dem Kennzeichen (2) in Eingriff gebracht werden kann, um dessen Verschiebung zu blockieren und Vibrationen zu dämpfen.

5. Kennzeichenhalter (1) nach einem der vorangehenden Ansprüche,
wobei der erste Abschnitt (60a) mindestens ein erstes zylindrisches Element (70a) aufweist, das von der ersten Fläche (4a) des zentralen Abschnitts (4) entlang einer ersten Richtung (Y) vorsteht;
wobei das erste zylindrische Element (70a) zumindest teilweise in Kontakt mit dem Nummernschild (2) ist, wenn das Nummernschild (2) in Gebrauch mit dem Kennzeichenhalter (1) gekoppelt ist.

6. Kennzeichenhalter (1) nach Anspruch 5,
wobei der zweite Abschnitt (60b) aufweist:
- mindestens ein zweites zylindrisches Element (70b), das von der zweiten Fläche (4b) des zentralen Abschnitts (4) entlang der ersten Richtung (Y) vorsteht; und
- mindestens ein erstes längliches Element (80a) und ein zweites längliches Element (80b), die sich jeweils parallel zu einer zweiten und einer dritten Richtung (Z, X) erstrecken, wobei die zweite und die dritte Richtung (Z, X) quer zueinander und zur ersten Richtung (Y) verlaufen;
wobei der zweite Abschnitt (60b) zumindest teilweise in Kontakt mit dem Fahrzeug ist, wenn der Kennzeichenhalter (1) in Gebrauch an dem Fahrzeug befestigt ist.

7. Kennzeichenhalter (1) nach Anspruch 5 oder 6,
wobei der erste Abschnitt (60a) eine Vielzahl von ersten zylindrischen Elementen (70a) aufweist, die in Bezug auf den Flächenmittelpunkt G des zentralen Abschnitts (4) den gleichen Abstand aufweisen;
wobei der zweite Abschnitt (60b) eine Vielzahl von zweiten zylindrischen Elementen (70b) aufweist, die in Bezug auf den Flächenmittelpunkt G des zentralen Abschnitts (4) den gleichen Abstand aufweisen;
wobei die zweiten zylindrischen Elemente (70b) näher an dem umlaufenden Rand (3) liegen als die ersten zylindrischen Elemente (70a).

8. Kennzeichenhalter (1) nach Anspruch 7,
wobei der zweite Abschnitt (60b) eine Vielzahl von ersten länglichen Elementen (80a) und eine Vielzahl von zweiten länglichen Elementen (80b) aufweist;
wobei jedes der ersten länglichen Elemente (80a) den dritten Abschnitt (60) mit einem entsprechenden ersten zylindrischen Element (70a) verbindet;
wobei jedes der zweiten länglichen Elemente (80b) den dritten Abschnitt (60) mit einem entsprechenden zweiten zylindrischen Element (70b) verbindet.

9. Kennzeichenhalter (1) nach einem der vorangehenden Ansprüche, wobei das Dämpfungselement (6) aus einem Elastomermaterial hergestellt ist.

10. Kennzeichenhalter (1) nach einem der vorangehenden Ansprüche, wobei der erste, zweite und dritte Abschnitt (60a, 60b, 60) mit dem Kennzeichenhalter (1) zusammen geformt sind.

11. Baugruppe (100) aufweisend:
- einen Kennzeichenhalter (1) nach einem der vorangehenden Ansprüche, und
- ein Klebeelement (8), das mit dem Kennzeichenhalter (1) verbunden ist.

12. Baugruppe (100) aufweisend:
- einen Kennzeichenhalter (1) nach einem der Ansprüche 1 bis 10; und
- ein Kennzeichen (2) das mit dem Dämpfungselement (6) mit dem Kennzeichenhalter (1) mittels des Dämpfungselementes (6) verbunden ist.

## Revendications

1. Support de plaque minéralogique (1) applicable pour être couplé à une plaque minéralogique (2) comprenant :
- un rebord périphérique (3) formé d'un premier bord (30) qui est sur le dessus à l'utilisation, d'un second bord (31) qui est sur le dessous l'utilisation et de deux troisièmes bords (32, 33) qui sont sur les côtés à l'utilisation,
- une partie de plaque centrale (4) délimitée par le rebord périphérique (3) et comprenant une première face (4a) adaptée pour être couplée à la plaque minéralogique (2) et une seconde face (4b) à l'opposé de la première face (4a), adaptée pour être couplée au véhicule, et
- un élément amortisseur (6) réalisé en un matériau amortisseur,
cet élément amortisseur (6) comprenant :
- une première partie (60a) et une seconde partie (60b) situées respectivement sur la première et la seconde face (4a, 4b), dans la partie centrale (4),
support **caractérisé en ce que**
l'élément amortisseur (6) comprend en plus une troisième partie (60) entourant tout le rebord périphérique (3).

2. Support de plaque minéralogique (1) selon la revendication 1,
dans lequel
la première, la seconde et la troisième parties (60a, 60b, 60) forment une seule pièce.

3. Support de plaque minéralogique (1) selon la revendication 1 ou 2, dans lequel
la troisième partie (60) comprend :
- un segment d'accrochage (90) appliqué, en débordant, sur le rebord périmétrique (3), et
- un bord (9) venant en saillie du segment d'accrochage (90) le long de l'ensemble du bord périmétrique (3) et s'étendant de façon à dépasser du segment d'ancrage (90) vers la première face (4a),
le bord en saillie (9) s'étendant de façon à surplomber le segment d'accrochage (90) vers la partie centrale (4).

4. Support de plaque minéralogique (1) selon la revendication 3,
dans lequel
le bord en saillie (9) forme un siège (10) dans la troisième partie (60) organisé le long de l'ensemble du bord périmétrique (3) et adapté pour recevoir la plaque minéralogique (2) pour verrouiller son déplacement et amortir ses vibrations.

5. Support de plaque minéralogique (1) selon l'une quelconque des revendications précédentes,
dans lequel
la première partie (60a) comprend au moins un premier élément cylindrique (70a) qui vient en saillie par rapport à la première face (4a) de la partie centrale (4) le long d'une première direction (Y),
- le premier élément cylindrique (70a) étant au moins partiellement en contact avec la plaque minéralogique (2) lorsque cette plaque minéralogique (2), en utilisation, est couplée au support de plaque minéralogique (1).

6. Support de plaque minéralogique (1) selon la revendication 5,
dans lequel
la seconde partie (60b) comprend :
- au moins un second élément cylindrique (70b) en relief par rapport à la seconde face (4b) de la partie centrale (4) le long de la première direction (Y), et
- au moins un premier élément allongé (80a) et un second élément allongé (80b), respectivement parallèles à une seconde et à une troisième directions (Z, X),
la seconde et la troisième direction (Z, X) étant orientées transversalement l'une par rapport à l'autre et par rapport à la première direction (Y),
la seconde partie (60b) étant au moins partiellement en contact avec le véhicule lorsque le support de plaque minéralogique (1) en utilisation est fixé au véhicule.

7. Support de plaque minéralogique (1) selon la revendication 5 ou 6, dans lequel
la première partie (60a) comprend un ensemble de premiers éléments cylindriques (70a) équidistants du centre de la surface (G) de la partie centrale (4),
la seconde partie (60b) comprend un ensemble de seconds éléments cylindriques (70b) équidistants du centre de la surface (G) de la partie centrale (4) ;
- les seconds éléments cylindriques (70b) sont plus près du rebord périmétrique (3) que les premiers éléments cylindriques (70a).

8. Support de plaque minéralogique (1) selon la revendication 7,
dans lequel
la seconde partie (60b) comprend un ensemble de premiers éléments allongés (80a) et un ensemble de seconds éléments allongés (80b),
- chacun des premiers éléments allongés (80a) relie la troisième partie (60) à un premier élément cylindrique (70a) respectif, et
- chacun des seconds éléments allongés (80b) relie la troisième partie (60) à un second élément cylindrique (70b) respectif.

9. Support de plaque minéralogique (1) selon l'une quelconque des revendications précédentes,
dans lequel
l'élément amortisseur (6) est en un matériau élastomère.

10. Support de plaque minéralogique (1) selon l'une quelconque des revendications précédentes,
dans lequel
la première, la seconde et la troisième partie (60a, 60b, 60) sont moulées ensemble avec le support de plaque minéralogique (1).

11. Ensemble (100) comprenant :
- un support de plaque minéralogique (1) selon l'une quelconque des revendications précédentes, et
- un élément en forme de tige (8) couplé au support de plaque minéralogique (1).

12. Ensemble (100) comprenant :
- un support de plaque minéralogique (1) selon l'une quelconque des revendications 1 à 10, et
- une plaque minéralogique (2) couplée au support de plaque minéralogique (1) avec l'élément amortisseur (6).
